# EUROPEAN PATENT APPLICATION

(11) **EP 4 276 789 A1**
(43) Date of publication of application: **15.11.2023**
(21) Application number: 22382452.5
(22) Date of filing: 10.05.2022
(51) Int. Cl.: G08G 1/00, G01S 5/00, G08G 5/00, H04W 4/02, G01C 21/00

(54) **VEHICLE TRAJECTORY TRACKING USING MOBILE DEVICES**

(71) Applicant: The Boeing Company, Arlington, VA 22202 (US)
(72) Inventor: LA CIVITA, Marco, 28042 MADRID (ES); COSTAS ÁLVAREZ, Pablo, 28042 MADRID (ES); CASADO, Enrique, 28042 MADRID (ES)
(74) Representative: ZBM Patents - Zea, Barlocci & Markvardsen

(57) **Abstract**

Vehicle trajectory tracking using mobile devices includes receiving, from a vehicle in transit, over a time period associated with a portion of the transit, sensor data values from a plurality of mobile electronic devices aboard the vehicle. Vehicle trajectory tracking also includes generating vehicle state variables based at least on the sensor data values and applying statistical processing to the vehicle state variables to generate vehicle trajectory data.

## Description

### FIELD OF THE DISCLOSURE

The subject disclosure is generally related to vehicle trajectory tracking using mobile devices.

### BACKGROUND

To improve the efficiency of and availability of vehicle trajectory tracking, myriad solutions have been implemented to track vehicles across the globe. These systems have many drawbacks, including limited coverage in areas where ground-based tracking is unavailable (e.g., over large bodies of water) and the relatively high cost and complexity of ground-based tracking systems.

One method of improving the effectiveness and efficiency of vehicle trajectory tracking is to improve the rate at which vehicle trajectory tracking data is gathered, sampled, and communicated. However, ground-based vehicle trajectory tracking systems cannot implement such improvements without greatly increasing cost and complexity. Further, even adding cost and complexity to ground-based systems does not address concerns with the limitations of such systems regarding vehicle tracking in areas of limited coverage.

### SUMMARY

In a particular implementation, a method includes receiving, from a vehicle in transit, over a time period associated with a portion of the transit, sensor data values from a plurality of mobile electronic devices aboard the vehicle. The method also includes generating vehicle state variables based at least on the sensor data values. The method also includes applying statistical processing to the vehicle state variables to generate vehicle trajectory data.

In another particular implementation, a system includes a memory configured to store instructions and one or more processors configured to receive, from a vehicle in transit, over a time period associated with a portion of the transit, sensor data values from a plurality of mobile electronic devices aboard the vehicle. The one or more processors can also be configured to generate vehicle state variables based at least on the sensor data values. The one or more processors can also be configured to apply statistical processing to the vehicle state variables to generate vehicle trajectory data.

In another particular embodiment, a non-transient, computer-readable medium stores instructions that, when executed by one or more processors, cause the one or more processors to initiate, perform, or control operations including receiving, from a vehicle in transit, over a time period associated with a portion of the transit, sensor data values from a plurality of mobile electronic devices aboard the vehicle. The operations also include generating vehicle state variables based at least on the sensor data values. The operations also include applying statistical processing to the vehicle state variables to generate vehicle trajectory data.

The features, functions, and advantages described herein can be achieved independently in various implementations or can be combined in yet other implementations, further details of which can be found with reference to the following description and drawings.

### BRIEF DESCRIPTION OF THE DRAWINGS

FIG. 1 depicts an example system for vehicle trajectory tracking using mobile devices, in accordance with at least one implementation of the subject disclosure.
FIG. 2 illustrates another example system for vehicle trajectory tracking using mobile devices, in accordance with at least one implementation of the subject disclosure.
FIG. 3 is a flow chart of an example of a method for providing vehicle trajectory tracking using mobile devices, in accordance with the subject disclosure.
FIG. 4 is a block diagram of a computing environment including a computing device configured to support aspects of computer-implemented methods and computer-executable program instructions (or code) according to the subject disclosure.

### DETAILED DESCRIPTION

Aspects disclosed herein use mobile devices to improve the efficiency and effectiveness of vehicle tracking systems, particularly by improving the manner in which vehicle tracking systems receive and process real-time (or near real-time) data associated with certain aspects of a vehicle in transit. Rather than rely on vehicle trajectory data from traditional ground-based systems, the instant systems and methods leverage the sensor capabilities of one or more mobile electronic devices on board the in-transit vehicle and the internet connectivity of those mobile electronic devices to the in-transit vehicle to provide (1) greater accuracy of vehicle trajectory tracking; (2) a relatively higher frequency of track updates than current systems at lower costs; (3) an enhancement to current air traffic control surveillance systems via improved flight tracking; (4) a relatively low-cost vehicle trajectory tracking redundancy system for use by, among others, stations tracking vehicles over remote areas; and/or (5) a redundant guidance, navigation, and control ("GNC") system for current and future autonomous systems (e.g., unmanned air vehicles, electric vertical take-off and landing vehicles, etc.) . to operate in urban and suburban environments. The vehicle trajectory tracking using mobile devices disclosed herein can also be used to leverage existing ground-based cellular communication infrastructure to provide enhanced positioning capabilities to air vehicles in case of a communications failure (e.g., a loss of communication link).

Additionally, in areas with limited standard surveillance coverage (e.g., oceans, remote areas, etc.), it can be difficult to track aircraft trajectories accurately and reliably. The vehicle trajectory tracking using mobile devices disclosed herein can provide enhanced accuracy and redundancy, increased track update rates, and tracking information beyond three-dimensional position information. The vehicle trajectory tracking using mobile devices disclosed herein can also improve existing air traffic control systems and/or airline flight management systems.

Further, the vehicle trajectory tracking using mobile devices disclosed herein can also support improvements to advanced air mobility ("AAM") technologies. For example, one of the main drivers of AAM is reliance on the safety of all operations. Having a highly reliable system that ensures air vehicles can operate under any circumstances is beneficial for the implementation of AAM. The vehicle trajectory tracking using mobile devices disclosed herein provides redundancy to a vehicle's onboard system responsible for computing and/or recording the actual position of the vehicle at a relatively low cost, leveraging a communication interface with ground-based communication infrastructure (e.g., a fifth-generation cellular network).

For example, certain extant solutions to track aircraft trajectories are based on data provided by ground-based radar stations and/or global positioning system ("GPS") data from the air vehicle's avionics transmitted over very high frequency ("VHF") or high frequency ("HF") radio or satellite networks through Automatic Dependent Surveillance Systems ("ADS"), which can be broadcast ("ADS-B") or through established connections contracts ("ADS-C"). Such systems have certain disadvantages, including limited radar coverage that cannot track flights outside line-of-sight radiofrequency range (e.g., oceanic flights); range limitations inherent to VHF/HF for ADS; cost and complexity of ground systems that support ADS over satellite networks; inaccurate tracking due to the low update rate frequency of ADS over satellite networks; and accuracy/redundancy limitations to onboard GPS.

The instant systems and methods can increase the accuracy and robustness of existing tracking solutions and/or provide a completely independent solution should one or more of the existing systems fail. For example, the vehicle trajectory tracking using mobile devices disclosed herein can take advantage of multiple independent positioning measurements obtained from a variety of devices, as described in more detail below. It could also be used to augment and/or backup on-board inertial navigation systems ("INS"), especially if the position of the mobile devices on board is known or can be estimated. Additionally, the position report rate can be increased compared to certain current systems by leveraging high-speed internet connection(s) onboard and multiple reporting mobile devices. Further, accuracy and rate improvement of position reports allow ground systems much faster conflict detection, improving flight safety. Further, this can provide a relatively lower-cost solution as it leverages measuring units (e.g., mobile devices) and a communications infrastructure (e.g., an onboard internet connection) on board a vehicle.

In some implementations, the instant systems and methods leverage sensors of a mobile electronic device (e.g., GPS, inertial measurement unit ("IMU"), barometer, etc.) to report various measurements (e.g., position, rates, accelerations, etc.) to a ground system over a wireless communication infrastructure deployed on a vehicle in transit. In a particular implementation, each mobile device can calculate data based on its measurements (e.g., rates, altitude, etc.). Statistical processing (e.g., Kalman filtering, etc.) may be applied to tracking reports from one or more mobile devices in order to improve accuracy of aircraft position information. Although accuracy improves with the number of available devices on board, the systems and methods disclosed herein can also be implemented with only one mobile device per vehicle in transit. Additionally, in some implementations, a ground system (centralized and/or distributed software) can receive data collected for every vehicle transit tracked. The ground system can be configured to fuse received data, identify and omit outliers (e.g., based on a vehicle trajectory prediction), and apply statistical processing (e.g., Kalman filtering) in order to improve position and state accuracy for each vehicle.

In a particular implementation, the instant systems and methods can be implemented in whole or in part as part of a software application installed on one or more mobile electronic devices. For example, the software could be downloadable by passengers as part of a software suite enabling mobile device access to a system-wide information management system ("SWIM"). As an illustrative example, the instant application hereby incorporates by reference U.S. Pat. No. 10,679,153, which describes a computer-implemented method and system for sharing information between passengers and air traffic management stakeholders.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

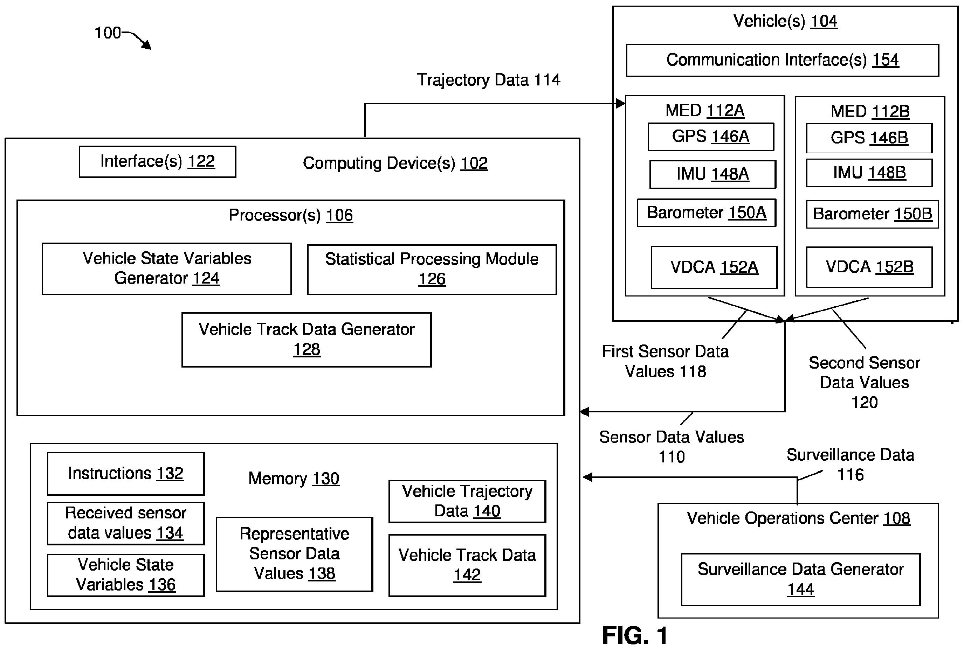

Particular implementations are described herein with reference to the drawings. In the description, common features are designated by common reference numbers throughout the drawings. As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts a system 100 including one or more processors ("processor(s)" 106 in FIG. 1), which indicates that in some implementations the system 100 includes a single processor 106 and in other implementations the system 100 includes multiple processors 106. For ease of reference herein, such features are generally introduced as "one or more" features and are subsequently referred to in the singular unless aspects related to multiple of the features are being described.

In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to FIG. 1, multiple barometers are illustrated and associated with reference numbers 150A and 150B. When referring to a particular one of these barometers, such as the barometer 120A, the distinguishing letter "A" is used. However, when referring to any arbitrary one of these barometers or to these barometers as a group, the reference number 150 is used without a distinguishing letter.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1 depicts an example system 100 for vehicle trajectory tracking using mobile devices, in accordance with at least one implementation of the subject disclosure. In some implementations, the system 100 includes one or more computing devices 102 configured to communicate with one or more vehicles 104 in transit and a vehicle operations center 108. For the purposes of the subject disclosure, a "vehicle" 104 can include any vehicle capable of locomotion and configured to transport at least one person, whether that person be passenger or crew. The vehicle(s) 104 can include automobiles, trucks, boats, ships, aircraft, etc.

In some implementations, each vehicle 104 can include one or more mobile electronic devices ("MED" or "mobile device") 112 transported thereon. For the purposes of the subject disclosure, a mobile device 112 can include any electronic device configured to be carried by a person on board a vehicle. For example, each of the mobile devices 112A and 112B can include a laptop computer, tablet computer, smartphone, smart watch, wearable electronic device, etc. In some implementations, the mobile device 112 can include one or more sensors. For example, the mobile device 112 can include a GPS 146, an IMU 148, a barometer 150, biometric sensors (e.g., heartrate, etc.), or other sensors. In a particular implementation, the GPS 146, the IMU 148, the barometer 150, and/or other sensors of the mobile device 112 can be the internal sensors routinely included with the mobile device 112. For example, a modern smartphone is typically equipped with a GPS and an IMU (e.g., an accelerometer). As an additional example, a smart watch can be equipped with certain biometric sensors such as a heartrate monitor.

In some implementations, the mobile device 112 can also include a vehicle data collection application ("VDCA") 152 configured to, among other functionality, cause sensors of the mobile device 112 to gather, aggregate, or otherwise collect sensor data values from the sensors of the mobile device 112. The VDCA 152 can also be configured to communicate the sensor data values to other components of the system 100. For example, the VDCA 152 can be configured to communicate the sensor data values to a wireless internet router onboard the vehicle 104. In such a particular implementation, the wireless internet router onboard the vehicle 104 can be further configured to communicate (or cause to be communicated) the sensor data values to other components of the system 100. For example, the wireless internet router can cause the sensor data values to be communicated to the vehicle operations center 108. The VDCA 152 can also be configured to, among other functionality, receive, manipulate, and otherwise process the trajectory data 114 received from the computing device(s) 102 for reporting to the user of the mobile device 112, as described in more detail below.

The example system 100 of FIG. 1 illustrates two mobile devices 112 on board one vehicle 104. The two mobile devices 112 are denoted MED 112A and MED 112B. The "A" and "B" signifiers are intended to note that both are illustrative depictions of the mobile device 112, though distinctions between the MED 112A and the MED 112B can exist in a particular implementation without departing from the scope of the subject disclosure. For example, the MED 112A, 112B can be different makes and/or models of smartphone that may have different GPS functionality, different IMUs, etc. Additionally, although the example system 100 illustrates two mobile devices 112 on board one vehicle 104, more, fewer, or different mobile devices 112 and/or vehicles 104 can be present in a particular implementation without departing from the scope of the subject disclosure. For example, one vehicle 104 can carry on board only one mobile device 112, while a second vehicle 104 can carry on board hundreds of mobile devices 112. Further, each mobile device 112 can have different functionality without departing from the scope of the present disclosure. For example, a particular mobile device 112 may not have a GPS 146, an IMU 148, or a barometer 150.

Referring again to the example system 100 of FIG. 1, each MED 112A, 112B can include a VDCA 152 configured to gather sensor data values associated with sensor readings from the particular mobile device 112. For example, the VDCA 152A of the MED 112A can be configured to gather the first sensor data values 118 from its GPS 146A, IMU 148A, and/or barometer 150A. Likewise, the VDCA 152B of the MED 112B can be configured to gather the second sensor data values 120 from its GPS 146B, IMU 148B, and/or barometer 150B.

In some implementations, the first sensor data values 118 can include one or more representative sensor data values generated by the MED 112A, where the one or more representative sensor data values are associated with a plurality of sensor values generated by sensors of the MED 112A during a portion of the time period during which the vehicle 104 is in transit. For the purposes of the subject disclosure, the term "sensor values" is used to indicate one or more measurements taken by a sensor (e.g., the GPS 146, the IMU 148, the barometer 150, etc.). The term "sensor data values" is used to indicate data generated by one or more mobile devices 112 and/or one or more vehicles 104 for communication to the computing device(s) 102. As described in more detail below, sensor data values are based on the sensor values and can represent a raw sensor value from a sensor, a collection of sensor values from one or more sensors, a processed (e.g., statistical processing, mathematical processing, aggregation, etc.) collection and/or representation of one or more sensor values, etc.

For example, the sensors of the MED 112A (e.g., the GPS 146A, the IMU 148A, the barometer 150A, etc.) can generate a plurality of sensor values over a period of time during which the vehicle 104 is in transit. The MED 112A can, in a particular embodiment, identify one or more representative sensor data values from among the plurality of sensor values generated over the time period. Identifying the one or more representative sensor data values can include removing, discarding, or otherwise omitting one or more outlying data values from the plurality of sensor values generated over the time period. This can include, for example, calculating an average of the plurality of sensor values, a range of the plurality of sensor values, one or more bins of the plurality of sensor values, a variance associated with the plurality of sensor values, etc. Identifying the one or more representative sensor data values can also include removing one or more outlying data values from the plurality of sensor data values. This can include, for example, removing one or more sensor data values that are outside a threshold range from a cluster of the plurality of sensor data values, removing one or more sensor data values that are outside a correlation threshold from the rest of the plurality of sensor data values, and/or other processing to identify one or more representative sensor data values.

In some implementations, the sensor data values 110 can include some or all of the first and second sensor data values 118, 120. The sensor data values 110 can include some or all of the first and second sensor data values 118, 120 for communication to the computing device(s) 102 in a variety of forms, including but not limited to packaging the first and second sensor data values 118, 120 into a single communication stream; separately communicating the first and second sensor data values 118, 120; and/or some combination thereof.

In some implementations, the vehicle(s) 104 can also include one or more communication interfaces 154. The communication interface(s) 154 can include one or more hardware and/or software components configured to communicate information between or among the mobile device(s) 112 and the vehicle(s) 104, as well as between or among the vehicle(s) 104 and the computing device(s) 102. For example, the communication interface(s) 154 can include a wireless internet router onboard the vehicle(s) 104, as described above. The wireless internet router can be configured to, among other things, provide in-transit internet services to the mobile device(s) 112, receive one or more sensor data values (e.g., the first sensor data values 118, the second sensor data values, 120, etc.) from the mobile device(s) 112, as well as communicate the sensor data values 110 to the computing device(s) 102. In a particular example, the communication interface(s) 154 can also be configured to communicate data (e.g., the sensor data values 110) to other components, systems, and/or entities, such as the vehicle operations center 108.

In some implementations, the computing device(s) 102 can be configured to receive sensor data values 110 from the vehicle(s) 104 in transit over a time period associated with a portion of the transit. The sensor data values 110 can be, in some implementations, data values associated with one or more sensor readings from one or more mobile electronic devices 112 on board a vehicle 104 in transit, as described in more detail above. In some implementations, the computing device(s) 102 can include one or more processors 106 communicatively coupled to at least one memory 130. In a particular implementation, some or all of the sensor data values 110 can be stored as the received sensor data values 134 at the memory 130.

In some implementations, the processor(s) 106 can include one or more modules configured to perform certain operations. For example, the processor(s) 106 can include a vehicle state variables generator 124, a statistical processing module 126, and a vehicle track data generator 128, as illustrated in example system 100. In other configurations, the processor(s) 106 can include more, fewer, and/or different modules without departing from the scope of the subject disclosure. For example, the vehicle state variables generator 124, the statistical processing module 126, and/or the vehicle track data generator 128 can be a part of different processors 106. As an additional example, the processor(s) 106 can include additional modules to, for example, generate reports associated with the sensor data values 110.

In some implementations, the vehicle state variables generator 124 can be configured to generate one or more vehicle state variables based at least on the sensor data values 110. The vehicle state variables generator 124 can be configured to generate one or more vehicle state variables 136 associated with a state of one or more of the vehicles 104. The vehicle state variables 136 can be associated with, for example, a vehicle's location, altitude, speed, etc. In a particular implementation, the vehicle state variables 136 can be stored in the memory 130. The vehicle state variables generator 124 can, in some implementations, be communicatively coupled to the statistical processing module 126.

In some implementations, the vehicle state variables generator 124 can be further configured to process the received sensor data values 134 to identify one or more representative sensor data values 138, which can, in a particular implementation, be stored at the memory 130. For example, identifying the one or more representative sensor data values 138 can include removing one or more outlying data values from the received sensor data values 134. This can include, for example, removing one or more sensor data values that are outside a threshold range from a cluster of the received sensor data values 134, removing one or more sensor data values that are outside a correlation threshold from the rest of the received sensor data values 134, and/or other processing to identify one or more representative sensor data values 138.

In some implementations, the statistical processing module 126 can be configured to apply statistical processing to the vehicle state variables 136 to generate vehicle trajectory data 140, which can, in a particular implementation, be stored at the memory 130. The statistical processing can include a variety of statistical processing operations applied to some or all of the received sensor data values 134 in order to generate the vehicle trajectory data 140. For example, the statistical processing module 126 can be configured to remove one or more outlying data values from the vehicle state variables 136, apply one or more Kalman filters to the vehicle state variables, and/or other statistical processing to generate the vehicle trajectory data 140. Removing outlying data variables can include, for example, removing one or more vehicle state variable values that are outside a threshold range from a cluster of vehicle state variable values, removing one or more vehicle state variable values that are outside a correlation threshold from the rest of the vehicle state variable values, and/or other processing to remove outlying data from the set of vehicle state variables 136. Applying one or more Kalman filters can allow for extrapolation of the existing vehicle state variables 136 by estimating a joint probability distribution over the vehicle state variables 136 for the portion of the vehicle's transit. Other statistical processes can be applied by the statistical processing module 126 to generate the vehicle trajectory data 140. In some implementations, the vehicle trajectory data 140 can include data associated with a trajectory of one or more of the vehicles 104. This can include data representative of the path the vehicle 104 follows through space as a function of time and can include, for example, time-series data associated with the position of the vehicle 104.

In some implementations, the computing device(s) 102 can be further configured to communicate the vehicle trajectory data 140 to other components of the system 100. For example, the computing device(s) 102 can be configured to communicate the vehicle trajectory data 140 to a vehicle operations center 108. The vehicle operations center 108 can use the vehicle trajectory data 140 to supplement its other data sources associated with the trajectory of the vehicle(s) 104 (e.g., as received from ground-based satellite stations).

In some implementations, the computing device(s) 102 can be further configured to communicate trajectory data 114 to the one or more mobile devices 112 of the vehicle(s) 104 in transit. The trajectory data 114 can be based at least in part on the vehicle trajectory data 140. In some implementations, the trajectory data 114 can be a subset of the vehicle trajectory data 140, all of the vehicle trajectory data 140, some or all of the vehicle trajectory data 140 associated with a plurality of vehicles 104, or some combination thereof.

In some implementations, the processor(s) 106 can also include a vehicle track data generator 128. The vehicle track data generator 128 can be configured to generate vehicle track data 142, which can, in a particular implementation, be stored at the memory 130. The vehicle track data generator 128 can be configured to generate the vehicle track data 142 based at least on the vehicle trajectory data 140 as well as surveillance data 116 received at the computing device(s) 102 from a vehicle operations center 108. The surveillance data 116 can be data associated with external tracking (e.g., by one or more components associated with the vehicle operations center 108) of one or more trajectory aspects of the vehicle 104 in transit as described in more detail below.

In some implementations, the vehicle operations center 108 can be a physical and/or logical collection of electronic components that can be centralized, decentralized, or some combination thereof, configured to receive tracking information from a plurality of vehicle tracking systems. For example, the vehicle operations center 108 can be a centralized aircraft tracking system configured to receive information associated with the tracking of a plurality of aircraft via numerous ground-based radar stations. In some implementations, the vehicle operations center 108 can include a surveillance data generator 144. The surveillance data generator 144 can be configured to generate the surveillance data 116 for communication to the computing device(s) 102. In some implementations, the surveillance data 116 can include data associated with the external tracking information received at the vehicle operations center 108 from the plurality of vehicle tracking systems. For example, the surveillance data 116 can include data associated with a plurality of radar stations' tracking of the vehicle 104 in transit. The radar stations can each communicate its external tracking information to the vehicle operations center 108, which can then combine the tracking information for communication to the computing device(s) 102 as some or all of the surveillance data 116.

As described above, once received at the computing device(s) 102, the vehicle track data generator 128 of the computing device(s) 102 can be configured to generate vehicle track data 142 based at least on the sensor data values 110 and the surveillance data 116. In a particular implementation, the vehicle track data 142 can be used to generate a vehicle track for communication and/or display to a user (e.g., a passenger on board the vehicle, a user accessing the vehicle's track remotely from the vehicle, etc.). The vehicle track can include, for example, data indicative of the vehicle 104's status as in transit, delayed, on time, arrived, etc.

In some implementations, the computing device(s) 102 can also include one or more interfaces 122. The interface(s) 122 can be configured to facilitate communication between the computing device(s) 102 and one or more other components of the system 100 such as the vehicle(s) 104 and/or the vehicle operations center 108. For example, the interface(s) 122 can include at least one wireless internet interface configured to receive the sensor data values 110 from the vehicle(s) 104 via a wireless internet link. In the same or alternative implementations, other components of the system 100 can include one or more interfaces configured to facilitate communication between or among the various components of the system 100. For example, the vehicle(s) 104 can include at least one wireless internet interface configured to receive the surveillance data 116 via a wireless internet link between the vehicle 104 in transit and the vehicle operations center 108. As an additional example, the vehicle operations center 108 can include at least one wireless internet interface configured to receive the sensor data values 110 via a wireless link between the vehicle(s) 104 and the vehicle operations center 108.

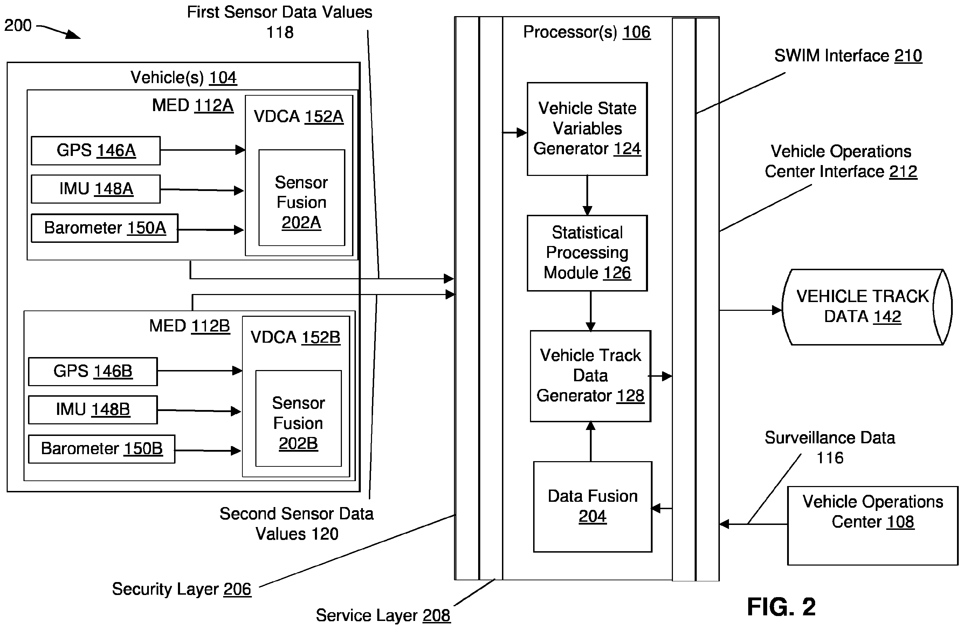

In some configurations, the memory 130 of the computing device(s) 102 can also include instructions 132 that, when executed by the processor(s) 106, cause the computing device(s) 102 to perform the functionality described in more detail above as well as the functionality described in more detail below with reference to FIGS. 2-4.

In operation, the plurality of mobile devices 112 (e.g., the MED 112A and the MED 112B) are present on board the vehicle 104, which is in transit. During a period of the vehicle 104's transit time, some or all of the sensors of the MED 112A, 112B (e.g., the GPS 146A, 146B; the IMU 148A, 148B; the barometer 150A, 150B) generate a plurality of sensor values particular to the individual sensor. The plurality of sensor values can then be processed, locally and/or remotely, and communicated to a vehicle operations center in order to provide vehicle tracking data as supplemental vehicle tracking data and/or stand-alone vehicle tracking data. As an illustrative example, an aircraft can carry a pilot and a co-pilot, each carrying a smartphone. During a portion of the aircraft's transit (e.g., an hour mid-flight), the GPS and accelerometer of each smartphone will generate a plurality of location and inertia measurements, respectively. The GPS and accelerometer readings can, in a particular configuration, be pre-processed to identify representative sensor data values. Whether pre-processed or not, the sensor readings (and/or the representative sensor data values) can be communicated to a computing device via the aircraft's internal wireless internet link. The computing device can then provide further processing of the sensor readings (and/or the representative sensor data values) to generate data associated with the aircraft's trajectory. The trajectory information can be shared back to the pilot and/or co-pilot (e.g., via an electronic flight bag application) and/or with a vehicle operations center 108.

Although FIG. 1 illustrates a particular configuration and deployment of the example system 100, different configurations and/or deployments are possible without departing from the scope of the subject disclosure. For example, the example system 100 illustrates the computing device(s) 102 as separate from the vehicle(s) 104 and the vehicle operations center 108. In a particular configuration, the computing device(s) 102 can be present within the vehicle(s) 104 (including distributed among a plurality of vehicles 104), within one or more components of the vehicle operations center 108, or some combination thereof. Additionally, the various components of the computing device(s) 102 can be distributed between or among a plurality of computing devices 102 without departing from the scope of the subject disclosure.

Additionally, although FIG. 1 illustrates the example system 100 providing vehicle trajectory tracking using mobile devices for a single vehicle 104, the example system 100 can provide vehicle trajectory tracking using mobile devices for a plurality of vehicles 104 without departing from the scope of the present disclosure. For example, the computing device(s) 102 can receive, from a second vehicle 104 in transit, over a second time period associated with a portion of the second vehicle 104's transit, second sensor data values from a second plurality of mobile electronic devices aboard the second vehicle. The computing device(s) 102 can be further configured to generate second vehicle state variables based at least on the second sensor data values and apply statistical processing to the second vehicle state variables to generate second vehicle trajectory data. The computing device(s) 102 can be further configured to communicate the second vehicle trajectory data to the vehicle operations center 108.

FIG. 2 illustrates another example system 200 for vehicle trajectory tracking using mobile devices, in accordance with at least one implementation of the subject disclosure. Generally, the system 200 corresponds to a particular implementation of the system 100 described in more detail above with reference to FIG. 1. Accordingly, components of the system 200 bearing a reference number that is also present in the system 100 of FIG. 1 generally correspond to their like-numbered counterpart components in the system 100. For example, the mobile electronic devices 112A, 112 B of the system 200 generally correspond to the mobile electronic devices 112A, 112B of the system 100 of FIG. 1.

In addition to the components illustrated in the system 100 of FIG. 1, the system 200 also illustrates certain components that can be present in a particular implementation of the system 200. For example, in the system 200 the mobile electronic devices 112A, 112B each include a sensor fusion component 202A, 202B, respectively. The sensor fusion component 202 can be a portion of the VDCA 152, as described in more detail above with reference to FIG. 1. The sensor fusion component 202 can be configured to, among other things, collect, combine, represent, or otherwise analyze the sensor values collected by the mobile device 112. For example, the sensor fusion component 202A can be configured to generate one or more representative sensor data values, as described in more detail above with reference to FIG. 1, and/or generate the first sensor data values 118 for communication to the computing device(s) 102. Likewise, the sensor fusion component 202B of the mobile electronic device 112B can be configured to generate one or more representative sensor data values and/or generate the second sensor data values 120 for communication to the computing device(s) 102

In some implementations, the operations of the processor(s) 106 of the computing device(s) 102 of FIG. 1 can also be wholly or partially contained by one or more access layers such as a security layer 206, a service layer 208, a SWIM interface layer 210, a vehicle operations center interface 212, etc. The access layer(s) can be one or more hardware and/or software components configured to perform certain functionality in the overall performance of the system 200. For example, the security layer 206 can be configured to provide, among other things, access control, user authentication, encryption/decryption, and/or other security-related operations. The service layer 208 can be configured to provide, among other things, access to the system 200 by third-party application, interface with a control layer, interface with a transport layer, and other network service-related operations.

The SWIM interface layer 210 can be configured to provide, among other things, access to the system 200 by one or more SWIM-related applications, as described in more detail above with reference to FIG. 1. For example, the SWIM interface layer 210 can be configured to provide access to the system 200 for one or more applications to provide system-wide information to passengers the vehicle(s) 104. The vehicle operations center interface 212 can be configured to provide, among other things, access to the system 200 by one or more vehicle operations centers 108. As described in more detail above with reference to FIG. 1, the computing device(s) 102 can be configured to receive information (e.g., the surveillance data 116) from the vehicle operations center 108. The computing device(s) 102 can also be configured to communicate information (e.g., the trajectory data 114 of FIG. 1) to the vehicle operations center 108. In a particular implementation, the communication between or among the computing device(s) 102 and the vehicle operations center 108 would be handled by the vehicle operations center interface 212.

In some implementations, the processor(s) 106 of the system 200 can also include a data fusion module 204. The data fusion module 204 can be configured to, among other things, collect, combine, represent, or otherwise analyze the sensor data values (e.g., the first sensor data values 118 and the second sensor data values 120) received by the processor(s) 106 in combination with information received from the vehicle operations center (e.g., the surveillance data 116). For example, the data fusion module 204 can be configured to generate the vehicle track data 142 based at least on vehicle trajectory data (e.g., the vehicle trajectory data 140 of FIG. 1) and the surveillance data 116, as described in more detail above with reference to FIG. 1.

As noted above with respect to FIG. 1, although FIG. 2 illustrates a particular configuration and deployment of the example system 200, different configurations and/or deployments are possible without departing from the scope of the subject disclosure. Additionally, although FIG. 2 illustrates the example system 200 providing vehicle trajectory tracking using mobile devices for a single vehicle 104, the example system 200 can provide vehicle trajectory tracking using mobile devices for a plurality of vehicles 104 without departing from the scope of the present disclosure.

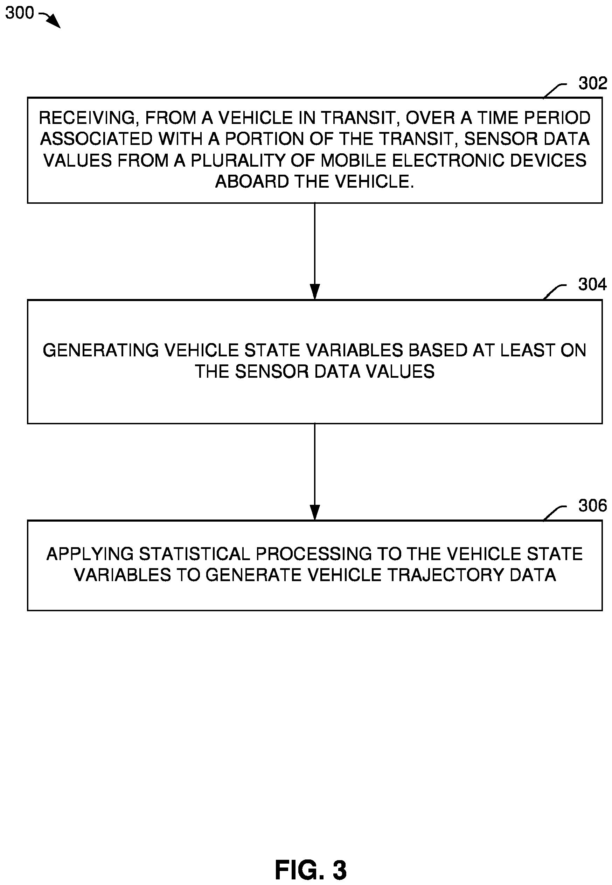

FIG. 3 is a flow chart of an example of a method 300 for providing vehicle trajectory tracking using mobile devices, in accordance with the subject disclosure. The method 300 can be initiated, performed, or controlled by one or more processors executing instructions, such as by the processor(s) 106 of FIG. 1 executing the instructions 132 from the memory 130.

In some implementations, the method 300 includes, at 302, receiving, from a vehicle in transit, over a time period associated with a portion of the transit, sensor data values from a plurality of mobile electronic devices aboard the vehicle. For example, the processor(s) 106 of FIG. 1 can receive the sensor data values 110 from the mobile electronic devices 112A, 112B aboard the vehicle 104.

In the example of FIG. 3, the method 300 also includes, at 304, generating vehicle state variables based at least on the sensor data values. For example, the processor(s) 106 of FIG. 1 can generate the vehicle state variables 136 based at least on the sensor data values 110. In the example of FIG. 3, the method 300 also includes, at 306, applying statistical processing to the vehicle state variables to generate vehicle trajectory data. For example, the processor(s) 106 of FIG. 1 can apply statistical processing to the vehicle state variables 136 to generate the vehicle trajectory data 140.

Although the method 300 is illustrated as including a certain number of steps, more, fewer, and/or different steps can be included in the method 300 without departing from the scope of the subject disclosure. For example, the method 300 can vary depending on the count of mobile devices 112 and/or the number of vehicles 104 communicating data to the computing device(s) 102 of FIG. 1 at a given time. For example, the method 300 can generate vehicle state variables and apply statistical processing to the vehicle state variables to generate vehicle trajectory data on a vehicle-by-vehicle basis.

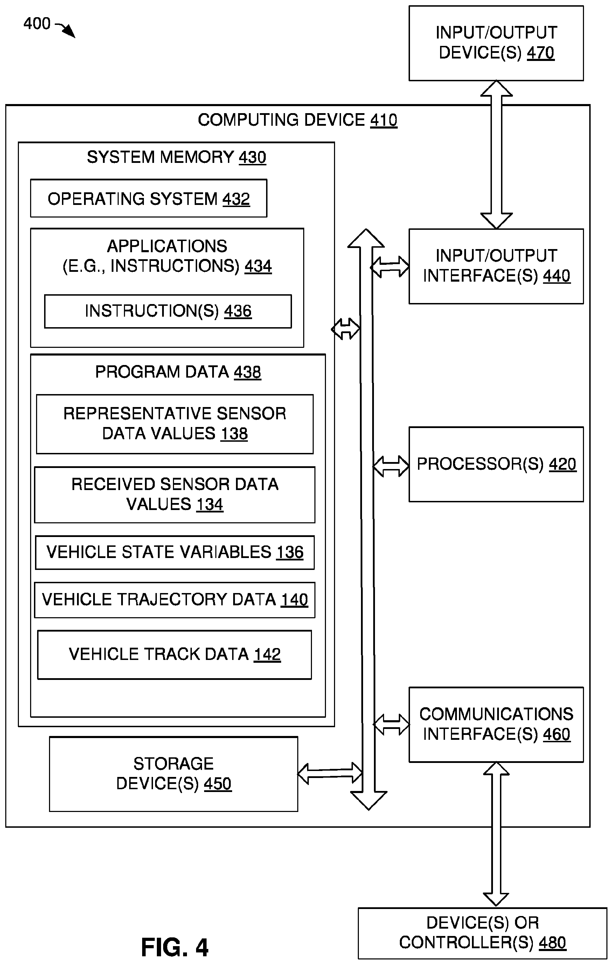

FIG. 4 is a block diagram of a computing environment 400 including a computing device 410 configured to support aspects of computer-implemented methods and computer-executable program instructions (or code) according to the subject disclosure. For example, the computing device 410, or portions thereof, is configured to execute instructions to initiate, perform, or control one or more operations described in more detail above with reference to FIGS. 1-3. In a particular aspect, the computing device 410 can include the computing device(s) 102, the vehicle operations center 108, the mobile device 112 of FIG. 1; one or more servers; one or more virtual devices; or a combination thereof.

The computing device 410 includes one or more processors 420. In a particular aspect, the processor(s) 420 correspond to the processor(s) 106 of FIG. 1. The processor(s) 420 is configured to communicate with system memory 430, one or more storage devices 450, one or more input/output interfaces 440, one or more communications interfaces 460, or any combination thereof. The system memory 430 includes volatile memory devices (e.g., random access memory (RAM) devices), nonvolatile memory devices (e.g., read-only memory (ROM) devices, programmable read-only memory, and flash memory), or both. The system memory 430 stores an operating system 432, which can include a basic input/output system for booting the computing device 410 as well as a full operating system to enable the computing device 410 to interact with users, other programs, and other devices. The system memory 430 stores system (program) data 438, such as the instructions 436, the received sensor data values 134, the vehicle state variables 136, the representative sensor data values 138, the vehicle trajectory data 140, the vehicle track data 142 of FIG. 1, or a combination thereof.

The system memory 430 includes one or more applications 434 (e.g., sets of instructions) executable by the processor(s) 420. As an example, the one or more applications 434 include the instructions 436 executable by the processor(s) 420 to initiate, control, or perform one or more operations described with reference to FIGS. 1-3. To illustrate, the one or more applications 434 include the instructions 436 executable by the processor(s) 420 to initiate, control, or perform one or more operations described with reference to generating the vehicle state variables 136, the vehicle trajectory data 140, or a combination thereof.

In a particular implementation, the system memory 430 includes a non-transitory, computer readable medium (e.g., a computer-readable storage device) storing the instructions 436 that, when executed by the processor(s) 420, cause the processor(s) 420 to initiate, perform, or control operations to provide vehicle trajectory tracking using mobile devices.

The operations include receiving, from a vehicle in transit, over a time period associated with a portion of the transit, sensor data values from a plurality of mobile electronic devices aboard the vehicle. The operations also include generating vehicle state variables based at least on the sensor data values. The operations also include applying statistical processing to the vehicle state variables to generate vehicle trajectory data.

The one or more storage devices 450 include nonvolatile storage devices, such as magnetic disks, optical disks, or flash memory devices. In a particular example, the storage devices 450 include both removable and non-removable memory devices. The storage devices 450 are configured to store an operating system, images of operating systems, applications (e.g., one or more of the applications 434), and program data (e.g., the program data 438). In a particular aspect, the system memory 430, the storage devices 450, or both, include tangible computer-readable media. In a particular aspect, one or more of the storage devices 450 are external to the computing device 410.

The one or more input/output interfaces 440 enable the computing device 410 to communicate with one or more input/output devices 470 to facilitate user interaction. For example, the one or more input/output interfaces 440 can include a display interface, an input interface, or both. For example, the input/output interface 440 is adapted to receive input from a user, to receive input from another computing device, or a combination thereof. In some implementations, the input/output interface 440 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device(s) 470 include one or more user interface devices and displays, including some combination of buttons, keyboards, pointing devices, displays, speakers, microphones, touch screens, and other devices. In a particular aspect, the input/output device(s) 470 include the interface(s) 122 of FIG. 1.

The processor(s) 420 are configured to communicate with devices or controllers 480 via the one or more communications interfaces 460. For example, the one or more communications interfaces 460 can include a network interface. The devices or controllers 480 can include, for example, one or more components of the vehicle(s) 104 and/or one or more components of the vehicle operations center 108 of FIG. 1.

In some implementations, a non-transitory, computer readable medium (e.g., a computer-readable storage device) stores instructions that, when executed by one or more processors, cause the one or more processors to initiate, perform, or control operations to perform part of or all the functionality described above. For example, the instructions can be executable to implement one or more of the operations or methods of FIGS. 1-3. In some implementations, part or all of one or more of the operations or methods of FIGS. 1-3 can be implemented by one or more processors (e.g., one or more central processing units (CPUs), one or more graphics processing units (GPUs), one or more digital signal processors (DSPs)) executing instructions, by dedicated hardware circuitry, or any combination thereof.

The illustrations of the examples described herein are intended to provide a general understanding of the structure of the various implementations. The illustrations are not intended to serve as a complete description of all of the elements and features of apparatus and systems that utilize the structures or methods described herein. Many other implementations can be apparent to those of skill in the art upon reviewing the disclosure. Other implementations can be utilized and derived from the disclosure, such that structural and logical substitutions and changes can be made without departing from the scope of the disclosure. For example, method operations can be performed in a different order than shown in the figures or one or more method operations can be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results can be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features can be grouped together or described in a single implementation for the purpose of streamlining the disclosure. Examples described above illustrate but do not limit the disclosure. It should also be understood that numerous modifications and variations are possible in accordance with the principles of the subject disclosure. As the following claims reflect, the claimed subject matter can be directed to less than all of the features of any of the disclosed examples. Accordingly, the scope of the disclosure is defined by the following claims and their equivalents.

Further, the disclosure comprises embodiments according to the following clauses:
According to Clause 1, a method includes receiving, from a vehicle in transit, over a time period associated with a portion of the transit, sensor data values from a plurality of mobile electronic devices aboard the vehicle. The method also includes generating vehicle state variables based at least on the sensor data values. The method also includes applying statistical processing to the vehicle state variables to generate vehicle trajectory data.
Clause 2 includes the method of Clause 1, wherein generating the vehicle state variables includes processing the sensor data values to identify one or more representative sensor data values.
Clause 3 includes the method of Clause 2, wherein processing the sensor data values to identify one or more representative sensor data values includes removing one or more outlying data values from the sensor data values.
Clause 4 includes the method of any of Clauses 1-3, wherein first sensor data values received from a first mobile electronic device of the plurality of mobile electronic devices include one or more representative sensor data values generated by the first mobile electronic device, the one or more representative sensor data values associated with a plurality of sensor values generated by sensors of the first mobile electronic device during the time period.
Clause 5 includes the method of Clause 4, wherein at least one of the one or more representative sensor data values includes an average of the plurality of sensor values, a range of the sensor values, one or more bins of the plurality of sensor values, or a variance associated with the plurality of sensor values.
Clause 6 includes the method of any of Clause 4 or 5, wherein the one or more representative sensor data values omit one or more outlying data values of the plurality of sensor data values.
Clause 7 includes the method of any of Clauses 1-6, further including: receiving surveillance data associated with external tracking of one or more trajectory aspects of the vehicle in transit; and generating vehicle track data based at least on the vehicle trajectory data and the surveillance data.
Clause 8 includes the method of Clause 7, wherein receiving the surveillance data includes receiving the surveillance data via a wireless internet link between the vehicle in transit and a vehicle operations center.
Clause 9 includes the method of any of Clauses 1-8, further including communicating, to the plurality of mobile electronic devices, trajectory data associated with the vehicle in transit, the trajectory data based at least on the vehicle trajectory data.
Clause 10 includes the method of any of Clauses 1-9, wherein the statistical processing includes removing one or more outlying data values from the vehicle state variables.
Clause 11 includes the method of any of Clauses 1-10, wherein the statistical processing includes applying one or more Kalman filters to the vehicle state variables.
Clause 12 includes the method of any of Clauses 1-11, wherein at least one of the sensor data values originates from a global positioning system ("GPS") component of one of the mobile electronic devices.
Clause 13 includes the method of any of Clauses 1-12, wherein at least one of the sensor data values originates from an inertial measurement unit ("IMU") component of one of the mobile electronic devices.
Clause 14 includes the method of any of Clauses 1-13, wherein at least one of the sensor data values originates from a barometer of one of the mobile electronic devices.
Clause 15 includes the method of any of Clauses 1-14, wherein at least one of the sensor data values originates from a biometric sensor of one of the mobile electronic devices.
Clause 16 includes the method of any of Clauses 1-15, further including communicating the vehicle trajectory data to a vehicle operations center.
Clause 17 includes the method of any of Clauses 1-16, further including: receiving, from a second vehicle in transit, over a second time period associated with a portion of the second vehicle's transit, second sensor data values from a second plurality of mobile electronic devices aboard the second vehicle; generating second vehicle state variables based at least on the second sensor data values; and applying statistical processing to the second vehicle state variables to generate second vehicle trajectory data.
Clause 18 includes the method of Clause 17, further including communicating the second vehicle trajectory data to a vehicle operations center.
Clause 19 includes the method of any of Clauses 1-18, wherein the sensor data values are received via a wireless link between the vehicle and a vehicle operations center.
Clause 20 includes the method of any of Clauses 1-19, wherein the vehicle includes an aircraft.
Clause 21 includes the method of Clause 20, wherein the plurality of mobile electronic devices include smartphones onboard the aircraft.
Clause 22 includes the method of Clause 21, wherein each of the smartphones includes a vehicle data collection application to cause sensors of at least one of the smartphones to collect the sensor data values and communicate the sensor data values to a wireless internet router onboard the aircraft.
Clause 23 includes the method of Clause 22, wherein the wireless internet router causes the sensor data values to be communicated to a vehicle operations center.
According to Clause 24, a non-transient, computer-readable medium stores instructions executable by one or more processors to perform operations that include receiving, from a vehicle in transit, over a time period associated with a portion of the transit, sensor data values from a plurality of mobile electronic devices aboard the vehicle. The operations also include generating vehicle state variables based at least on the sensor data values. The operations also include applying statistical processing to the vehicle state variables to generate vehicle trajectory data.
Clause 25 includes the non-transient, computer-readable medium of Clause 24, wherein generating the vehicle state variables includes processing the sensor data values to identify one or more representative sensor data values.
Clause 26 includes the non-transient, computer-readable medium of Clause 25, wherein processing the sensor data values to identify one or more representative sensor data values includes removing one or more outlying data values from the sensor data values.
Clause 27 includes the non-transient, computer-readable medium of any of Clauses 24-26, wherein first sensor data values received from a first mobile electronic device of the plurality of mobile electronic devices include one or more representative sensor data values generated by the first mobile electronic device, the one or more representative sensor data values associated with a plurality of sensor values generated by sensors of the first mobile electronic device during the time period.
Clause 28 includes the non-transient, computer-readable medium of Clause 27, wherein at least one of the one or more representative sensor data values includes an average of the plurality of sensor values, a range of the sensor values, one or more bins of the plurality of sensor values, or a variance associated with the plurality of sensor values.
Clause 29 includes the non-transient, computer-readable medium of either of Clause 27 or 28, wherein the one or more representative sensor data values omit one or more outlying data values of the plurality of sensor data values.
Clause 30 includes the non-transient, computer-readable medium of any of Clauses 24-29, wherein the operations further include: receiving surveillance data associated with external tracking of one or more trajectory aspects of the vehicle in transit; and generating vehicle track data based at least on the vehicle trajectory data and the surveillance data.
Clause 31 includes the non-transient, computer-readable medium of Clause 30, wherein receiving the surveillance data includes receiving the surveillance data via a wireless internet link between the vehicle in transit and a vehicle operations center.
Clause 32 includes the non-transient, computer-readable medium of any of Clauses 24-31, wherein the operations further include communicating, to the plurality of mobile electronic devices, trajectory data associated with the vehicle in transit, the trajectory data based at least on the vehicle trajectory data.
Clause 33 includes the non-transient, computer-readable medium of any of Clauses 24-32, wherein the statistical processing includes removing one or more outlying data values from the vehicle state variables.
Clause 34 includes the non-transient, computer-readable medium of any of Clauses 24-33, wherein the statistical processing includes applying one or more Kalman filters to the vehicle state variables.
Clause 35 includes the non-transient, computer-readable medium of any of Clauses 24-34, wherein at least one of the sensor data values originates from a global positioning non-transient, computer-readable medium ("GPS") component of one of the mobile electronic devices.
Clause 36 includes the non-transient, computer-readable medium of any of Clauses 24-35, wherein at least one of the sensor data values originates from an inertial measurement unit ("IMU") component of one of the mobile electronic devices.
Clause 37 includes the non-transient, computer-readable medium of any of Clauses 24-36, wherein at least one of the sensor data values originates from a barometer of one of the mobile electronic devices.
Clause 38 includes the non-transient, computer-readable medium of any of Clauses 24-37, wherein at least one of the sensor data values originates from a biometric sensor of one of the mobile electronic devices.
Clause 39 includes the non-transient, computer-readable medium of any of Clauses 24-38, wherein the operations further include communicating the vehicle trajectory data to a vehicle operations center.
Clause 40 includes the non-transient, computer-readable medium of any of Clauses 24-39, wherein the operations further include: receiving, from a second vehicle in transit, over a second time period associated with a portion of the second vehicle's transit, second sensor data values from a second plurality of mobile electronic devices aboard the second vehicle; generating second vehicle state variables based at least on the second sensor data values; and applying statistical processing to the second vehicle state variables to generate second vehicle trajectory data.
Clause 41 includes the non-transient, computer-readable medium of Clause 40, wherein the operations further include communicating the second vehicle trajectory data to a vehicle operations center.
Clause 42 includes the non-transient, computer-readable medium of any of Clauses 24-41, wherein the sensor data values are received via a wireless link between the vehicle and a vehicle operations center.
Clause 43 includes the non-transient, computer-readable medium of any of Clauses 24-42, wherein the vehicle includes an aircraft.
Clause 44 includes the non-transient, computer-readable medium of Clause 43, wherein the plurality of mobile electronic devices include smartphones onboard the aircraft.
Clause 45 includes the non-transient, computer-readable medium of Clause 44, wherein each of the smartphones includes a vehicle data collection application to cause sensors of at least one of the smartphones to collect the sensor data values and communicate the sensor data values to a wireless internet router onboard the aircraft.
Clause 46 includes the non-transient, computer-readable medium of Clause 45, wherein the wireless internet router causes the sensor data values to be communicated to a vehicle operations center.
According to Clause 47, a system includes a memory configured to store instructions and one or more processors. The one or more processors are configured to receive, from a vehicle in transit, over a time period associated with a portion of the transit, sensor data values from a plurality of mobile electronic devices aboard the vehicle. The one or more processors is also configured to generate vehicle state variables based at least on the sensor data values. The one or more processors is also configured to apply statistical processing to the vehicle state variables to generate vehicle trajectory data.
Clause 48 includes the system of Clause 47, wherein the one or more processors are further configured to generate the vehicle state variables by processing the sensor data values to identify one or more representative sensor data values.
Clause 49 includes the system of Clause 48 wherein the one or more processors are further configured to process the sensor data values to identify one or more representative sensor data values by removing one or more outlying data values from the sensor data values.
Clause 50 includes the system of any of Clauses 47-49, wherein first sensor data values received from a first mobile electronic device of the plurality of mobile electronic devices include one or more representative sensor data values generated by the first mobile electronic device, the one or more representative sensor data values associated with a plurality of sensor values generated by sensors of the first mobile electronic device during the time period.
Clause 51 includes the system of Clause 50, wherein at least one of the one or more representative sensor data values includes an average of the plurality of sensor values, a range of the sensor values, one or more bins of the plurality of sensor values, or a variance associated with the plurality of sensor values.
Clause 52 includes the system of either of Clauses 50 or 51, wherein the one or more representative sensor data values omit one or more outlying data values of the plurality of sensor data values.
Clause 53 includes the system of any of Clauses 47-52, wherein the one or more processors are further configured to: receive surveillance data associated with external tracking of one or more trajectory aspects of the vehicle in transit; and generate vehicle track data based at least on the vehicle trajectory data and the surveillance data.
Clause 54 includes the system of Clause 53, wherein the one or more processors are further configured to receive the surveillance data by receiving the surveillance data via a wireless internet link between the vehicle in transit and a vehicle operations center.
Clause 55 includes the system of any of Clauses 47-54, wherein the one or more processors are further configured to communicate, to the plurality of mobile electronic devices, trajectory data associated with the vehicle in transit, the trajectory data based at least on the vehicle trajectory data.
Clause 56 includes the system of any of Clauses 47-55, wherein the one or more processors are further configured to apply statistical processing by removing one or more outlying data values from the vehicle state variables.
Clause 57 includes the system of any of Clauses 47-56, wherein the one or more processors are further configured to apply statistical processing by applying one or more Kalman filters to the vehicle state variables.
Clause 58 includes the system of any of Clauses 47-57, wherein at least one of the sensor data values originates from a global positioning system ("GPS") component of one of the mobile electronic devices.
Clause 59 includes the system of any of Clauses 47-58, wherein at least one of the sensor data values originates from an inertial measurement unit ("IMU") component of one of the mobile electronic devices.
Clause 60 includes the system of any of Clauses 47-59, wherein at least one of the sensor data values originates from a barometer of one of the mobile electronic devices.
Clause 61 includes the system of any of Clauses 47-60, wherein at least one of the sensor data values originates from a biometric sensor of one of the mobile electronic devices.
Clause 62 includes the system of any of Clauses 47-61, wherein the one or more processors is further configured to communicate the vehicle trajectory data to a vehicle operations center.
Clause 63 includes the system of any of Clauses 47-62, wherein the one or more processors is further configured to: receive, from a second vehicle in transit, over a second time period associated with a portion of the second vehicle's transit, second sensor data values from a second plurality of mobile electronic devices aboard the second vehicle; generate second vehicle state variables based at least on the second sensor data values; and apply statistical processing to the second vehicle state variables to generate second vehicle trajectory data.
Clause 64 includes the system of Clause 63, wherein the one or more processors is further configured to communicate the second vehicle trajectory data to a vehicle operations center.
Clause 65 includes the system of any of Clauses 47-64, wherein the sensor data values are received via a wireless link between the vehicle and a vehicle operations center.
Clause 66 includes the system of any of Clauses 47-65, wherein the vehicle includes an aircraft.
Clause 67 includes the system of Clause 66, wherein the plurality of mobile electronic devices include smartphones onboard the aircraft.
Clause 68 includes the system of Clause 67, wherein each of the smartphones includes a vehicle data collection application to cause sensors of at least one of the smartphones to collect the sensor data values and communicate the sensor data values to a wireless internet router onboard the aircraft.
Clause 69 includes the system of Clause 68, wherein the wireless internet router causes the sensor data values to be communicated to a vehicle operations center.

## Claims

1. A method (300) comprising:
receiving (302), from a vehicle (104) in transit, over a time period associated with a portion of the transit, sensor data values (110) from a plurality of mobile electronic devices (112) aboard the vehicle;
generating (304) vehicle state variables (136) based at least on the sensor data values; and
applying (306) statistical processing (126) to the vehicle state variables to generate vehicle trajectory data (140).

2. The method of claim 1, wherein generating the vehicle state variables comprises processing the sensor data values to identify one or more representative sensor data values (138).

3. The method of claim 2, wherein processing the sensor data values to identify one or more representative sensor data values comprises removing one or more outlying data values from the sensor data values.

4. The method according to any of claims 1 to 3, wherein first sensor data values (118) received from a first mobile electronic device (112A) of the plurality of mobile electronic devices comprise one or more representative sensor data values generated by the first mobile electronic device, the one or more representative sensor data values associated with a plurality of sensor values generated by sensors of the first mobile electronic device during the time period.

5. The method of claim 4, wherein at least one of the one or more representative sensor data values comprises an average of the plurality of sensor values, a range of the sensor values, one or more bins of the plurality of sensor values, a variance associated with the plurality of sensor values, or an omission of one or more outlying data values of the plurality of sensor data values.

6. The method according to any of claims 1 to 5, further comprising:
receiving surveillance data (116) associated with external tracking of one or more trajectory aspects of the vehicle in transit; and
generating (128) vehicle track data (142) based at least on the vehicle trajectory data and the surveillance data.

7. The method according to any of claims 1 to 6, wherein the statistical processing comprises removing one or more outlying data values from the vehicle state variables.

8. The method according to any of claims 1 to 7, wherein the statistical processing comprises applying one or more Kalman filters to the vehicle state variables.

9. The method according to any of claims 1 to 8, wherein at least one of the sensor data values originates from a global positioning system ("GPS") component (146) of one of the mobile electronic devices, an inertial measurement unit ("IMU") component (148) of one of the mobile electronic devices, a barometer (150) of one of the mobile electronic devices, or a biometric sensor of one of the mobile electronic devices.

10. The method according to any of claims 1 to 9, further comprising:
receiving, from a second vehicle in transit, over a second time period associated with a portion of the second vehicle's transit, second sensor data values (120) from a second plurality of mobile electronic devices aboard the second vehicle;
generating second vehicle state variables based at least on the second sensor data values; and
applying statistical processing to the second vehicle state variables to generate second vehicle trajectory data.

11. The method according to any of claims 1 to 10, wherein the vehicle includes an aircraft and the plurality of mobile electronic devices include smartphones onboard the aircraft.

12. The method of claim 11, wherein each of the smartphones includes a vehicle data collection application (152) to cause sensors of at least one of the smartphones to collect the sensor data values and communicate the sensor data values to a wireless internet router (154) onboard the aircraft.

13. A non-transient, computer-readable medium (130) storing instructions (132) executable by one or more processors (106) to perform the steps of the method according to any of claims 1 to 12.

14. A system (100) comprising:
a memory configured to store instructions; and
one or more processors configured to:
receive, from a vehicle in transit, over a time period associated with a portion of the transit, sensor data values from a plurality of mobile electronic devices aboard the vehicle;
generate vehicle state variables based at least on the sensor data values; and
apply statistical processing to the vehicle state variables to generate vehicle trajectory data.

15. The system of claim 14, wherein:
the vehicle includes an aircraft and the plurality of mobile electronic devices include smartphones onboard the aircraft; and
each of the smartphones includes a vehicle data collection application to cause sensors of at least one of the smartphones to collect the sensor data values and communicate the sensor data values to a wireless internet router onboard the aircraft.
